# EUROPEAN PATENT SPECIFICATION

(11) **EP 4 453 532 B1**
(45) Date of publication and mention of the grant of the patent: **09.12.2026**
(21) Application number: 22908897.6
(22) Date of filing: 22.12.2022
(51) Int. Cl.: G01N 1/31, B01L 3/00, B01L 9/00, G01N 35/00

(54) **SAMPLE PROCESSING ASSEMBLY FOR TREATMENT OF A SAMPLE ON A SUBSTRATE**
PROBENVERARBEITUNGSANORDNUNG ZUR BEHANDLUNG EINER PROBE AUF EINEM SUBSTRAT
ENSEMBLE DE TRAITEMENT D'ÉCHANTILLON POUR LE TRAITEMENT D'UN ÉCHANTILLON SUR UN SUBSTRAT

(30) Priority: 23.12.2021 AU 2021904242
(43) Date of publication of application: 30.10.2024
(73) Proprietor: Leica Biosystems Melbourne Pty Ltd, Mt Waverley, VIC 3149 (AU)
(72) Inventor: TAN, Phong Me, Victoria 3810 (AU)
(74) Representative: Carpmaels & Ransford LLP
(86) International application number: PCT/AU2022/051559
(87) International publication number: WO 2023/115135

(56) References cited:
- WO-A1-2014/066950
- WO-A1-2019/033172
- US-A1- 2003 129 756
- US-A1- 2006 166 371
- US-A1- 2016 216 176
- US-A1- 2020 188 904
- US-A1- 2020 319 067

## Description

### Technical Field

The present invention relates to a slide staining assembly, typically for use in a laboratory instrument, to facilitate automated staining of samples on slides. The invention relates particularly to an assembly configured to support a cover member for forming a reaction chamber with the slide for the processing of samples.

### Background of Invention

Immunohistochemical staining and in situ nucleic acid analysis are tools used in histological diagnosis and the study of tissue morphology. Immunohistochemical staining relies on the specific binding affinity of antibodies with epitopes in tissue samples, and the increasing availability of antibodies which bind specifically with unique epitopes present only in certain types of diseased cellular tissue. Immunohistochemical staining involves a series of treatment steps conducted on a tissue sample (typically a section) mounted on a glass slide to highlight, by selective staining, certain morphological indicators of disease states.

Typical treatment steps include pre-treatment of the tissue sample to reduce non-specific binding, antibody treatment and incubation, enzyme labelled secondary antibody treatment and incubation, substrate reaction with the enzyme to produce a fluorophore or chromophore highlighting areas of the tissue sample having epitopes binding with the antibody, counterstaining, and the like. Between each treatment step, the tissue sample must be rinsed to remove unreacted residual reagent from the prior step. Most treatment steps involve a period of incubation typically conducted at ambient temperature of around 25°C up to around 40°C, while cell conditioning steps are typically conducted at somewhat higher temperatures, e.g. 90°C to 100°C. In-situ DNA analysis relies upon the specific binding affinity of probes (DNA binding proteins) with unique nucleotide sequences in cell or tissue samples and similarly involves a series of process steps, with a variety of reagents and process temperature requirements. Some specific reactions involve temperatures up to 120°C to 130°C.

Instrumentation and automated sample processing systems exist for automating some steps in the treatment processes discussed above. However, current systems that involve the use of reaction chambers often result in drying out of tissue samples in between the application of reagents. To compensate, there is a need to constantly hydrate the tissue samples. Automated application of hydration solution to the tissue samples requires use of the robotic reagent dispensation system of the instrument. Because of sample dehydration in automated systems, it is necessary to add extra treatment steps to the process which limits the availability of robotic dispensers for substantive steps required for other reactions being undertaken on the instrument.

Sample dehydration can result in slide sticking concerns. A first sticking mode arises when a slide sticks to the cover member brought into contact with the slide to create a reaction chamber. This can particularly occur after an incubation when the staining clamber is full of DI water, in some cases for hydration purposes. The staining chamber height is frequently only 140 microns, so the capillary force is strong enough to hold the tile to the cover member and lift it away from a heat spreader on which the slide is mounted when the slide is not stuck to the heat spreader.

A second sticking mode can arise with a sticky cover member seal. Under high temperature and clamping pressure during incubation, a slide can stick to the cover members silicone seal. A third sticking mode that can arise is glue making the slide and label stick to previous slide retaining mechanisms.

It would be desirable to provide a sample processing assembly for treating a sample and a substrate that addressed one or more above mentioned slide sticking issues with the existing sample processing assemblies. It would also be desirable to provide a sample processing assembly for treatment of a sample on a substrate that ameliorates or overcomes one or more problems or inconveniences of the assisting sample processing assemblies.

US 2020/188904 A1 and US 2020/319067 A1 disclose cover members for use in biological sample treatment.

A reference herein to a patent document or any other matter identified as prior art, is not to be taken as an admission that the document or other matter was known or that the information it contains was part of the common general knowledge as at the priority date of any of the claims.

### Summary of Invention

The invention provides for a substrate retaining mechanism according to claim 1. One advantageous aspect of the invention provides a sample processing assembly for treatment of a sample on a substrate, the assembly including:
a mounting block including a mounting surface for the substrate;
a closure body configured to support a cover member, the closure body being rotatable about a first pivot axis between an open position and a closed position, such that when the substrate is placed in the assembly and the closure body is in the closed position, the cover member engages the substrate to form a reaction chamber for processing the sample;
a closure body arm rotatable about the second pivot axis and engaging with the closure body so that rotation of the arm about the second pivot axis causes movement of the closure body between the open and closed positions; and
a substrate retaining mechanism including:
   a cam, and
   a substrate retaining arm rotatable about the first pivot axis, the substrate retaining arm including a cam follower for sliding engagement with the cam,
   wherein the substrate retaining mechanism is configured so that
   when the closure body is closed and the cover member engages the substrate, the substrate retaining arm is clear of the substrate,
   as the closure body arm commences rotation to enable the closure body to rotate towards the open position, but whilst the closure body remains in a closed position, the substrate retaining arm moves into engagement with the substrate, and
   once the cover member is fully separated from substrate, the substrate retaining arm disengages with the substrate.

In one or more embodiments, the cam is a grooved cam formed in a side wall of the closure body arm.

In one or more embodiments, the cam follower is a cam pin projecting laterally from the substrate retaining arm.

In one or more embodiments, the assembly further includes a first pivot pin to enable rotation of the cover body about the first pivot axis.

In one or more embodiments, the substrate retaining arm is attached to and rotatable about the first pivot pin.

In one or more embodiments, the assembly further includes a second pivot pin located through the mounting block to enable rotation of the closure body arm about the second pivot axis.

In one or more embodiments, the substrate retaining arm includes protrusions for making contact with and applying a retaining force to the substrate.

In one or more embodiments, the substrate retaining mechanism is further configured so that the substrate retaining arm disengages from the substrate perpendicular to the surface of the substrate.

In one or more embodiments, the closure body arm includes a lateral projection for engaging with the closure body.

### Brief Description of Drawings

The present invention will now be described in greater detail with reference to the accompanying drawings. It is to be understood that the embodiments shown are examples only and are not to be taken as limiting the scope of the invention as defined in the claims appended hereto.
Figure 1 is a schematic illustration of an instrument with which a sample processing assembly according to the present invention may be used.
Figure 2 is an isometric view of a sample processing assembly viewed from the front when in an open position.
Figure 3 is an isometric view of the sample processing assembly of Figure 2 is a closed position when viewed from the front.
Figure 4 is an isometric view of the sample processing assembly of Figure 1 when in an open position when viewed from one side.
Figures 5 and 6 are isometric views of a substrate retaining arm forming part of a substrate retaining mechanism concluded in the sample processing assembly of Figure 1.
Figure 7 is a closure body arm including the cam forming part of the substrate retaining mechanism included in the sample processing assembly of Figure 1.
Figure 8 is an isometric view of the sample processing assembly of Figure 1 in a first operative state in which the assembly is in the closed position and the substrate retaining arm is disengaged from the substrate mounted within the assembly.
Figure 9 is an isometric view of the sample processing assembly of Figure 1 in a second operative state in which the assembly is closed and the substrate retaining arm moves into engagement with the substrate.
Figure 10 is an isometric view of the sample processing assembly of Figure 1 in a third operative state in which the assembly commences opening but the substrate retaining arm continues to be engaged with the substrate.
Figures 11 and 12 are isometric views of the sample processing assembly of Figure 1 operative state in which the assembly continues to open and a cover member supported by a closure body forming part of the assembly is completely separated from the substrate whilst the substrate retaining arm remains engaged with the substrate.
Figure 13 is an isometric view of the sample processing assembly of Figure 1 in a fifth operative state in which the cover member is fully separated from the substrate, and the substrate retaining arm disengages from the substrate in a vertical direction.
Figure 14 is an isometric view of the sample processing assembly of Figure 1 in a sixth operative state, in which the assembly is fully open and the cover member and substrate retaining arm are fully disengaged from the substrate.
Figure 15 is a side view of the closure arm body shown in Figure 7.
Figure 16 is a side view of the substrate retaining arm shown in Figures 5 and 6.

### Detailed Description

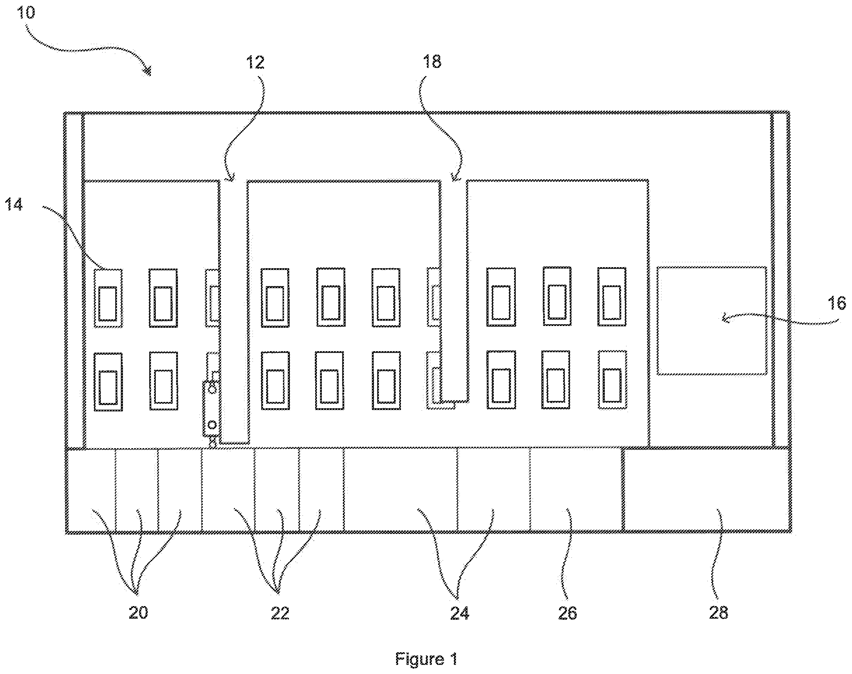

Figure 1 depicts generally an instrument 10, including a robotic head 12 which opens and closes the body of a sample processing assembly 14. The instrument 10 dispenses reagent through a probe on the robotic head 12 into the assembly 14 in accordance with instructions received from a controller 16 forming part of the instrument 10. Ideally, the instrument 10 contains a plurality of a sample processing assemblies of the kind described and claimed herein, such that a number of individual samples may be processed by the instrument 10 in an automated fashion with little or no manual intervention.

Such an instrument 10 may employ the single robotic head 12 for dispensing reagents, and potentially a second or subsequent robot 18 may be involved. Typically, the instrument 10 houses containers of reagent 20, 22, 24 and 26, typically fluid reagent, of the various types that are required to complete the processing steps controlled by the controller 16. The robotic dispensing heads 12 and 18 are coupled to the containers 20 to 26 by a fluid distribution system (tubing between the containers and the heads) to dispense fluid into the sample processing assembly 14 using a probe. Fluid may also be dispensed from the reagent containers 20 to 26 on board the instrument 10 via a fluid distribution system absent the probe, i.e., using tubing.

A probe and robotic dispensing system is described in US Provisional Patent Application 61/721,269 entitled "A Fluid Transport System" having a filing date of 1 November 2012; and US Provisional Patent Application 61/721,257 entitled "A Slide Transport System" having a filing date of 1 November 2012. There is also a waste system with a waste reservoir 28 for disposing waste reagent that may be collected from the sample processing assembly 14 and/or various wash stations in the instrument. The instrument 10 may recycle some reagents and may collect some reagents for recycling or disposal off board the instrument.

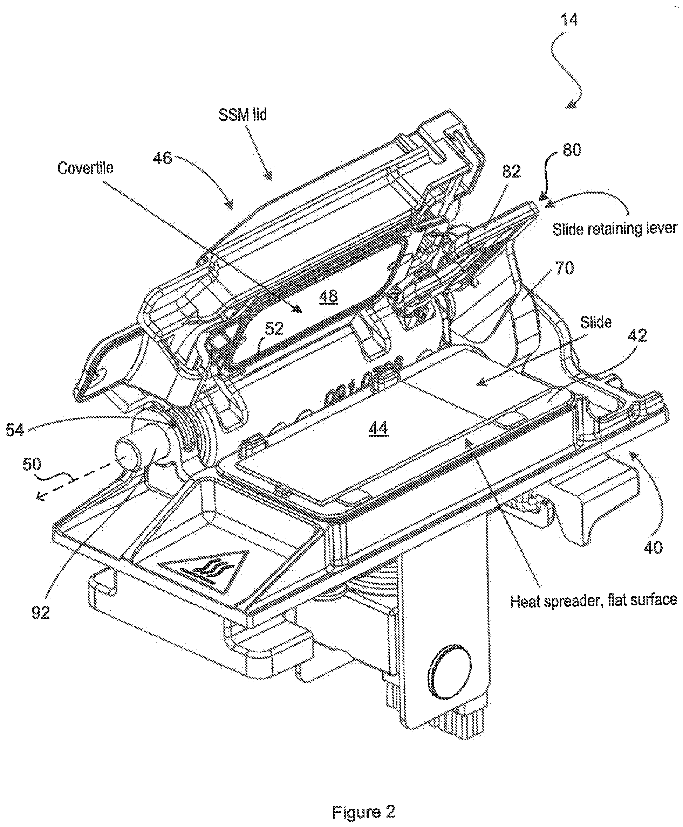

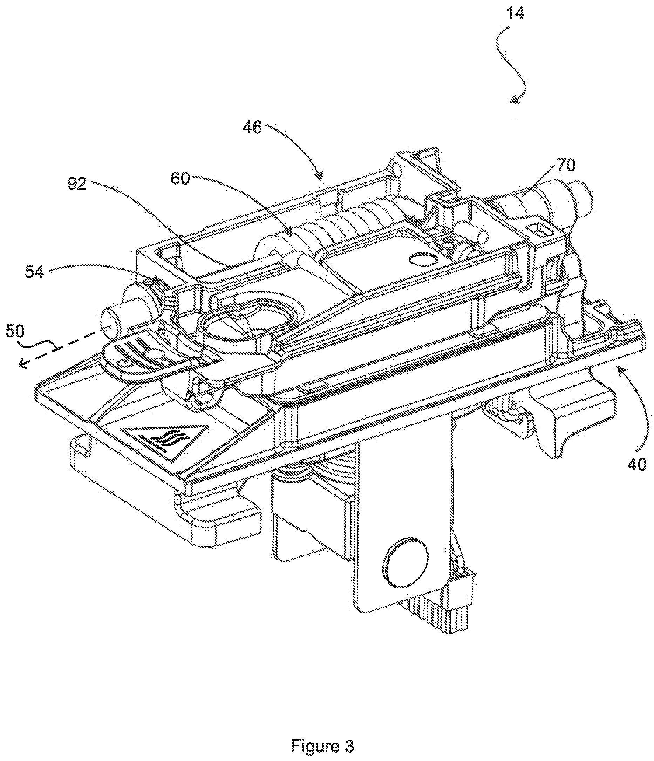

Figure 2 depicts the sample processing assembly 14 in greater detail. In this figure, the sampling processing assembly 14 is shown in open position and viewed from the front. The sample processing assembly 14 includes a mounting block 14 including a mounting surface 42 for supporting a substrate 44. The sample processing assembly further includes a closure body 46 configured to support a cover member 48. The closure body 46 is rotatable about a first pivot axis 50 between the open position shown in Figure 2 and a closed position shown in Figure 3, so that when the substrate 44 is placed in the assembly 14 and the closure body 46 is in the closed position as seen in Figure 3, the cover member 48 engages the substrate 44 to form a reaction chamber for processing a sample on the substrate 44.

In that regard, the cover member 48 includes an interior wall 52 facing the substrate 44 and defining a void within the boundaries of the interior wall 52 such that when the closure body 46 is rotated about the first pivot axis 50 to a closed position, the interior wall 52 engages with the substrate 44 to form the reaction chamber.

The sample processing assembly 14 includes two opposing biasing means. Specifically, an opening biasing means 54 is provided for applying a biasing force to the closure body 46 to cause it to rotate about the first pivot axis 50 to the open position shown in Figure 2. A closing biasing means 60, shown in Figure 3, is provided for providing a biasing force to the closure body 46 so that it is caused to rotate about the pivot axis 50 to the closed position shown in that figure. In the embodiment illustrated in Figures 2 and 3, the biasing means 54 and 60 are springs.

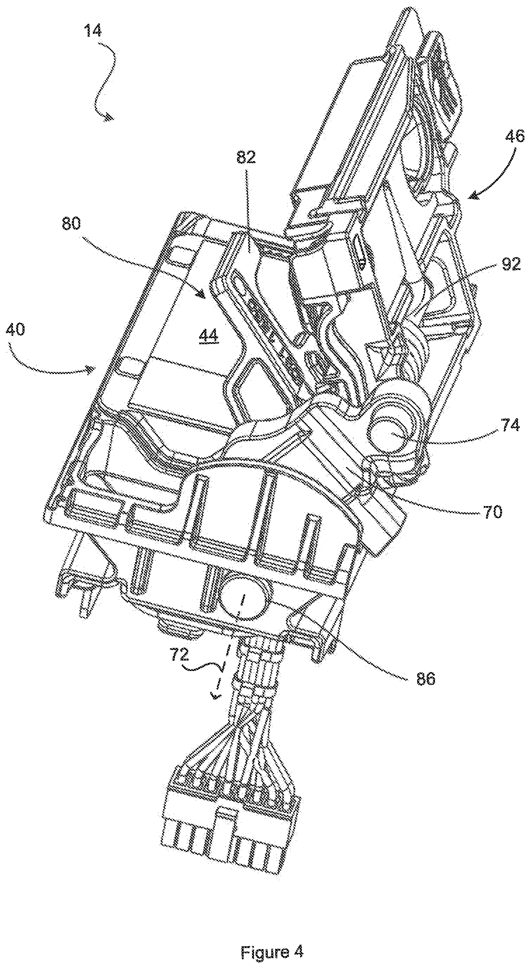

As best seen in Figure 4, the sample processing assembly 14 further includes a closure body arm 70 rotatable about a second pivot axis 72 and engaging with the closure body 46 so that rotation of the closure body arm about the second pivot axis 72 causes movement of the closure body 46 between the open position shown in Figures 2 and 4, and the closed position shown in Figure 3. The closure body arm 70 include a first lateral projection 74 extending away from the closure body 46 and the mounting block 40. The robotic head 12 engages the first lateral projection 74 and applies a force to cause rotation of the closure body arm 70 about the second pivot axis 72.

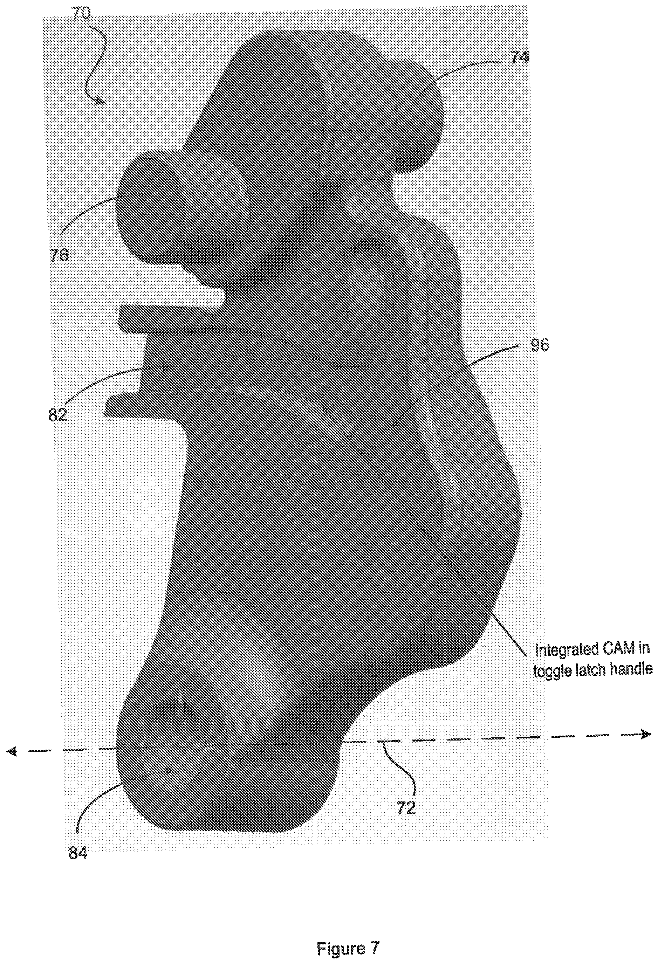

As can be best seen in Figure 7, the closure body arm 70 further includes a second lateral projection 76 extending towards the closure body 46 and configured so that upon rotation of the closure body arm 74 about the second pivot axis 72, the second lateral projection 76 engages with an upper surface of the closure body 46 to cause movement of the closure body 46 towards the closed position shown in Figure 3.

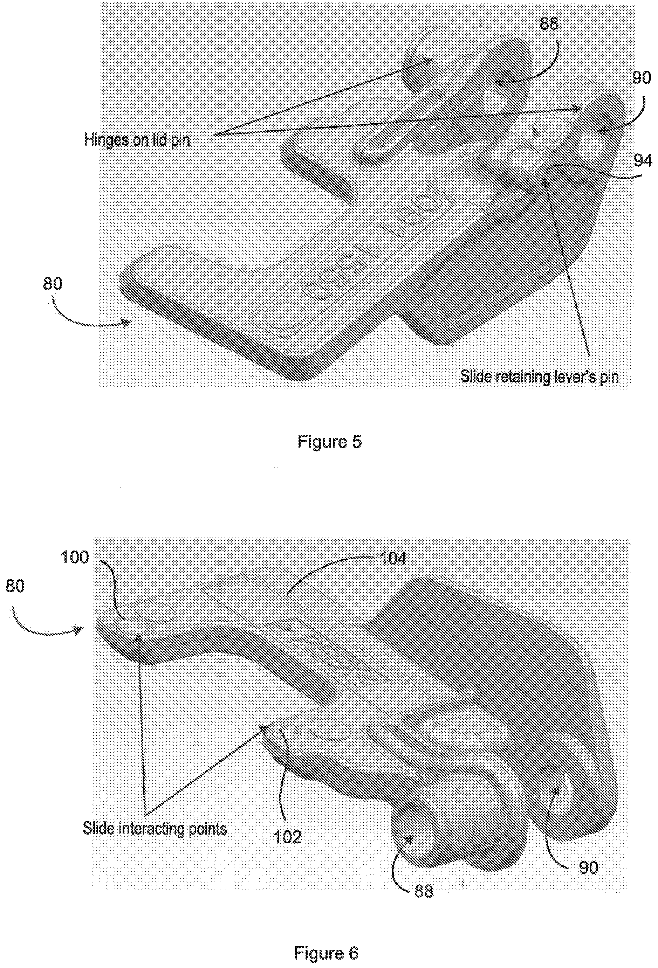

The sample processing assembly 14 further includes a substrate retaining mechanism 80 including a substrate retaining arm 82 and a cam 83. The substrate retaining arm 82 can be best seen in Figures 5 and 6, whist the cam 83 can be best seen in Figure 7.

The closure body arm 70 includes a first pivot hole 84 through which a first pivot pin 86 (seen in Figure 4) passed. The first pivot pin 86 is mounted through the mounting block 40 to enable rotation of the closure body arm 70 about the second pivot axis 72.

The substrate retaining arm 82 includes second and third pivot holes 88 and 90 for mounting the substrate retaining mechanism 80 about a second pin 92 attaching the mounting block 40 to the closure body 46 to enable rotatable movement of the substrate retaining arm 82 about the first pivot axis 50.

As seen in Figure 5, the substrate retaining arm 82 further includes a cam follower 94, in the form of a laterally projecting cam pin, for location in the cam 83. It can be seen from Figure 7 that, in this embodiment, the cam 83 is a grooved cam formed in a side wall 96 of the closure body arm 70 facing the substrate retaining arm 82.

As the robotic head 12 engages with the projection 74 to drive the closure body arm 70 that it rotates about the pivot access 72, the cam follower 94 is guided by the grooved cam 83 so that the substrate retaining arm 82 is caused to rotate about the pivot axis 50.

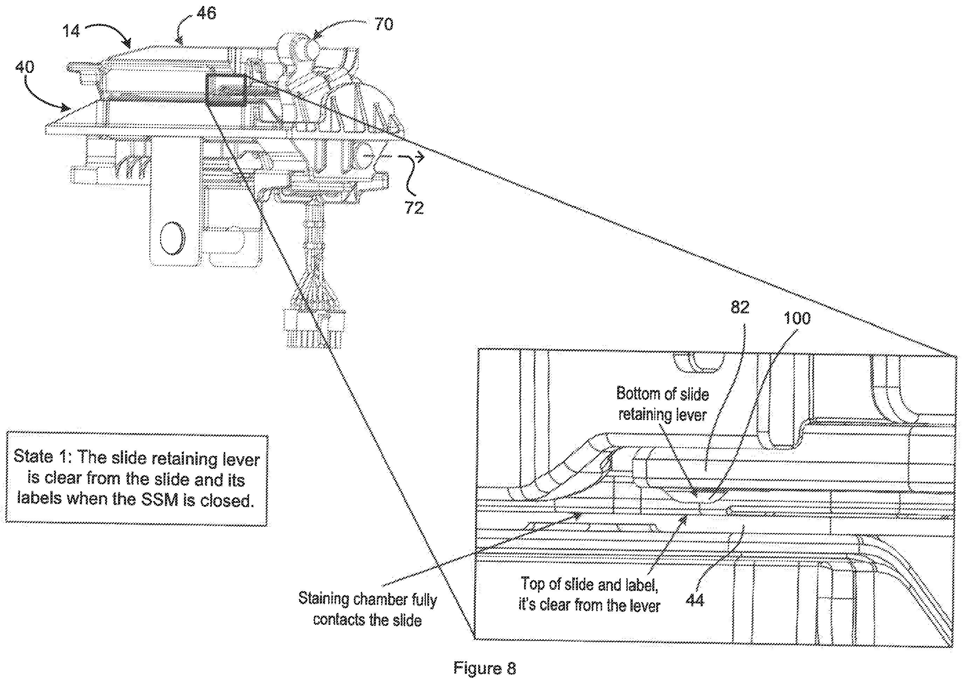

As will be explained with reference to Figures 8 to 14, the substrate retaining mechanism 80 is configured so that:
i.when the closure body 46 is closed and the cover member 48 engages the substrate 44, the substrate retaining arm 82 is clear of the substrate,
ii.as the closure body arm 70 commences rotation to enable the closure body 46 to rotate towards the open position, but whilst the closure body 46 remains in a closed position, the substrate retaining arm 82 moves into engagement with the substrate 44, and
iii.once the cover member 48 is fully separated from the substrate 44, the substrate retaining arm 82 disengages with the substrate 44.

In the position shown in Figure 8, the closure body 46 is closed and the cover member 48 engages the substrate 44. The substrate retaining arm 82 is clear from the substrate.

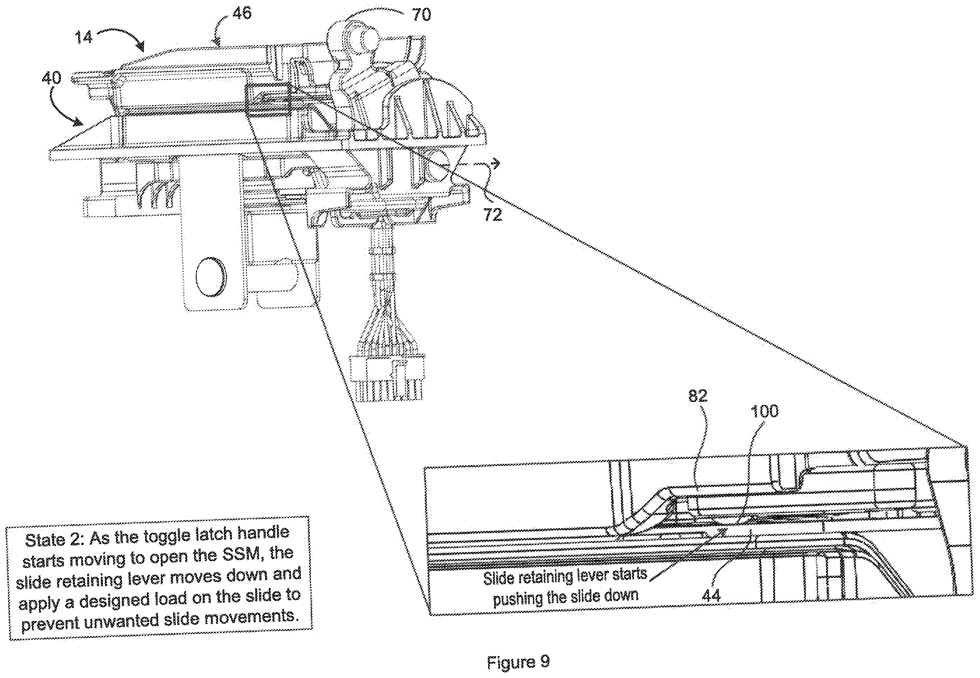

However, as can be seen in Figure 9, as the closure body arm 70 rotates about the pivot axis 72 to open the sample processing assembly, the substrate retaining arm 82 moves towards and applies a designated load to the substrate 44 to prevent unwanted movement of the substrate 44. In that regard, the substrate retaining arm 82 includes protrusions 100 and 102 (seen in Figure 6) projecting from an underside 104 of the substrate retaining arm 82 for making contact with and applying a retaining force to the substrate 44.

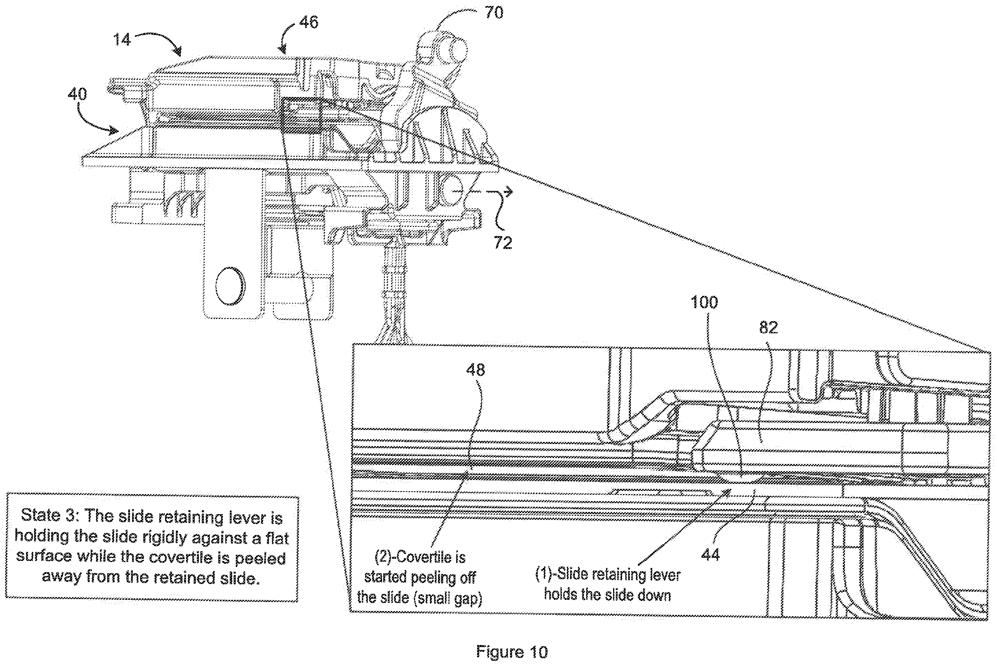

As seen in Figure 10, the substrate retaining arm 82 continues to hold the substrate 44 rigidly against an underlying support surface whilst the closure body arm 70 continues to rotate about the second pivot access 72 to open the sample processing assembly 14. Accordingly, the closure body 46 is caused to rotate about the pivot axis 50 away from the mounting block 40. During an initial part of the sample processing assembly opening, the wall 52 of the cover member 48 is separate from ("peeled off") the substrate 44, whilst the substrate retaining arm 82 continues to apply a force through the projections 100 and 102 to retain the substrate 44 in place.

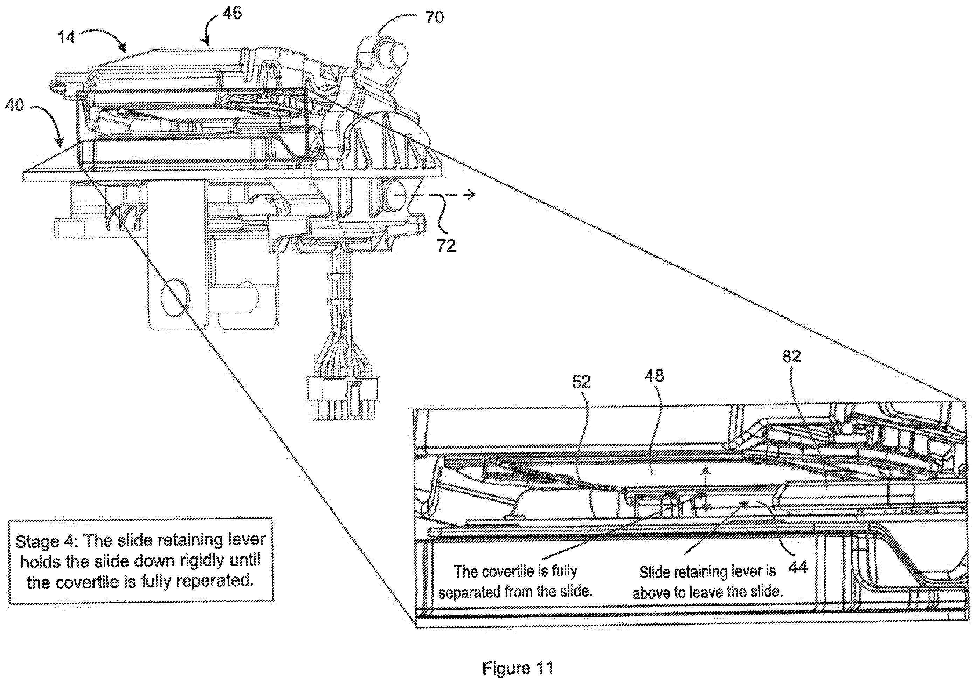

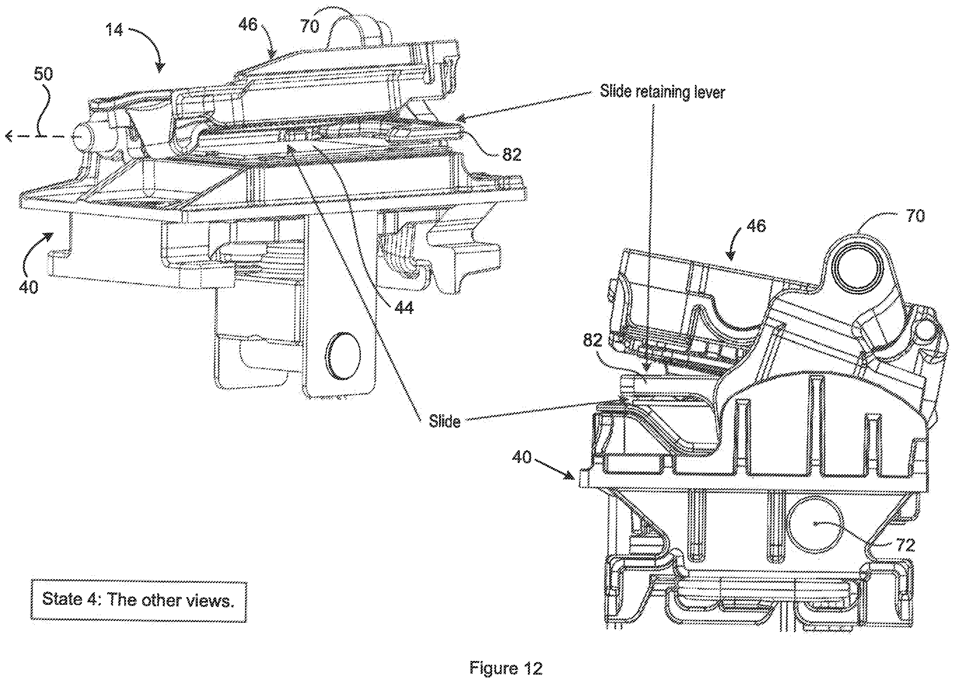

Figures 11 and 12 shows the sample processing assembly 14 in a position where the wall 52 of the cover member 48 has completely separated from the substrate 44, whilst the substrate retaining arm 82 remains in a position engaging the substrate 44.

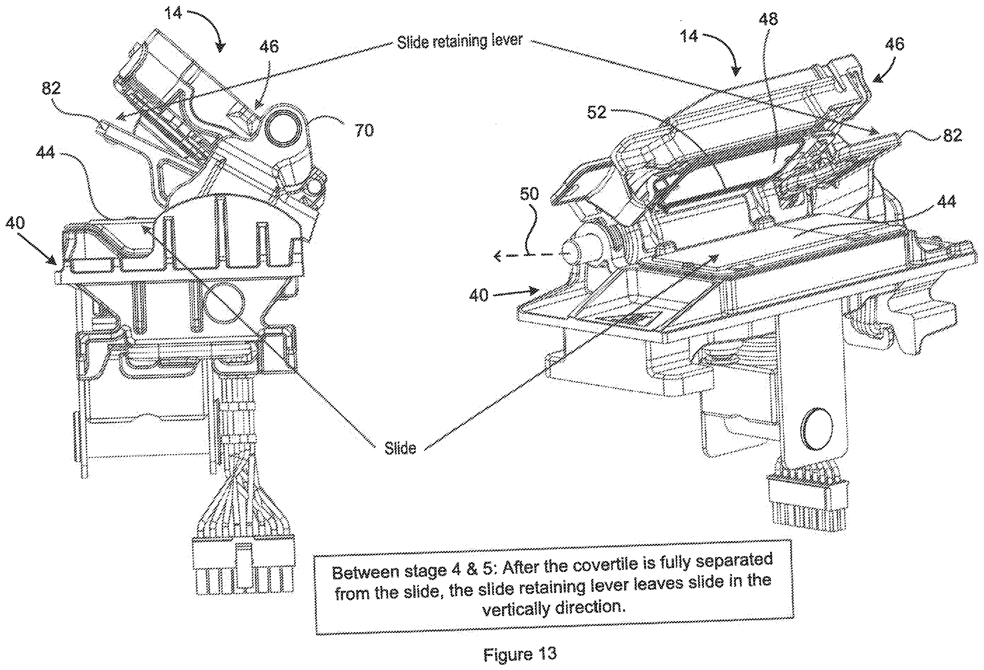

As shown in Figure 13, once the cover member 48 has fully separated from the substrate 44 the substrate retaining arm 82 disengages from the substrate 44, the grooved cam 83, cam follower 94 and the relative locations of the pivot axis 50 and 72 cause the substrate retaining arm 82 to disengage from the substrate 44. The substrate retaining mechanism 80 is configured so that the substrate retaining arm 82 leaves the substrate 44 vertically, or in other words, perpendicular to the surface of the substrate 44.

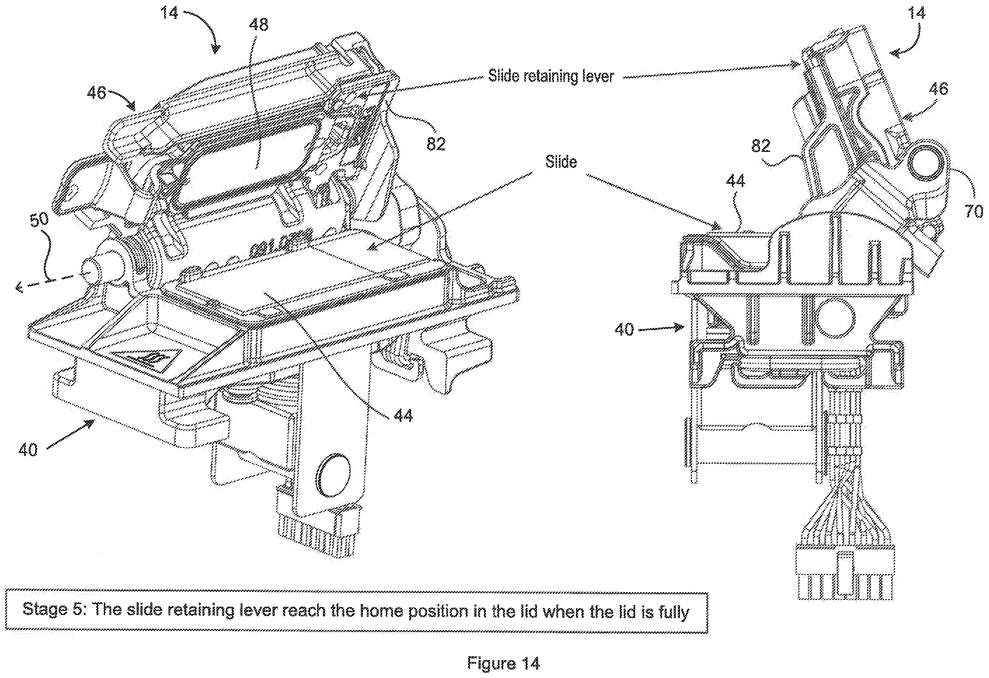

As can be seen in Figure 14, once the sample processing assembly 14 is fully open, both the closure body arm 70 has rotated about the pivot axis 72 to a maximum extent, and the substrate retaining arm 82 has rotated about the pivot axis 50 to a maximum extent, the cover member and retaining arm both being completely clear from the substrate 44.

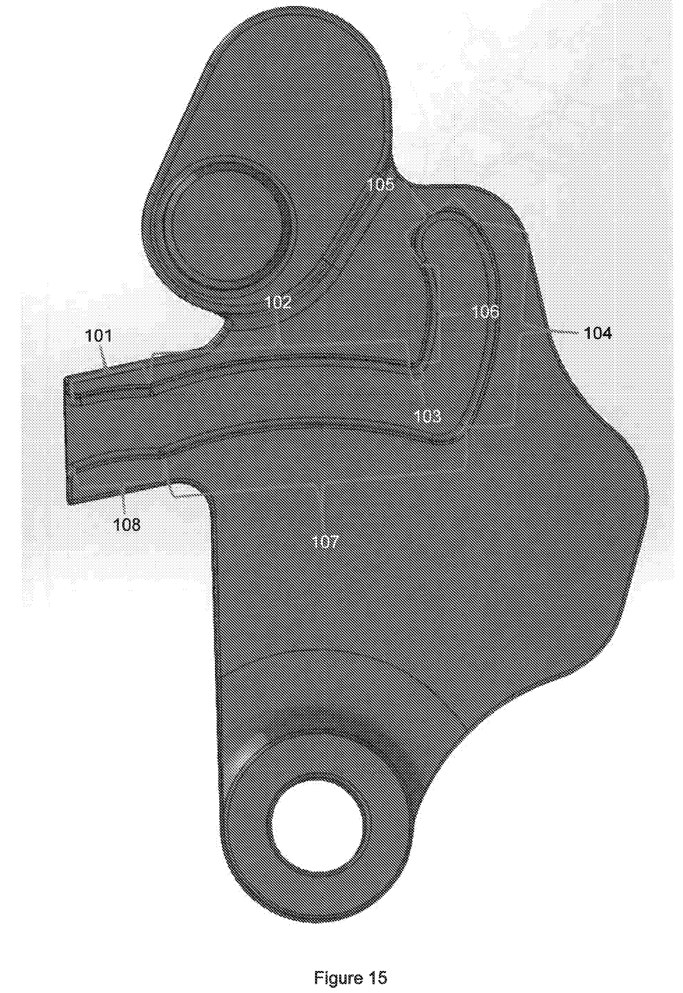

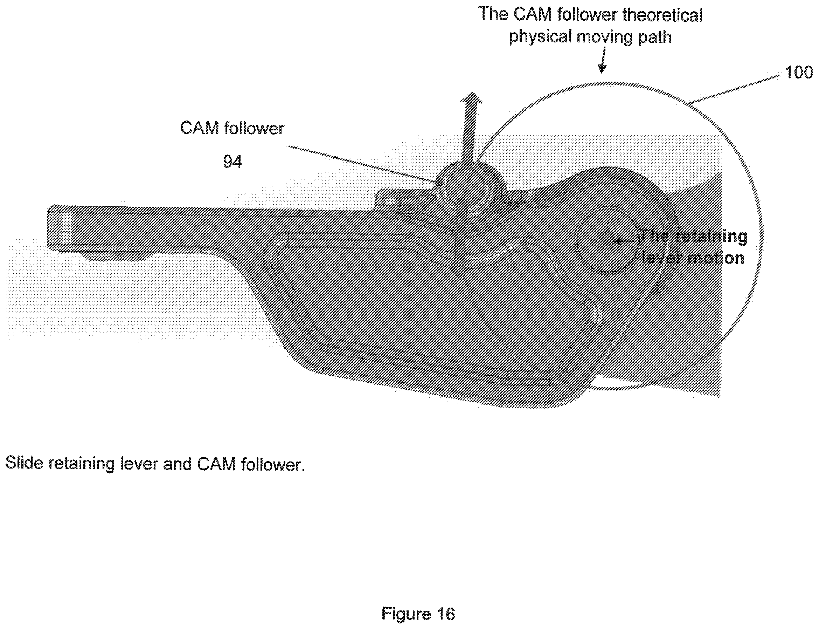

Figure 15 depicts sections 101 to 108 of the cam 83, whilst Figure 16 depicts the cam follower 94 and notably the theoretical physical moving path 100 of the cam follower 94 about the first pivot axis 50. In order to more fully explain the operation of the cam 83 and the cam follower 94, and their impact on the operation of the sample processing assembly 14, the following table describes the operative state of the sample processing assembly 14 in relation to sections 101 to 109 of the cam 83:

| CAM section | **Operative States** | **Note** |
|---|---|---|
| 101 | As sample processing assembly 14 starts to open, this section of the cam 83 acts to drive the substrate retaining arm 82 down and push a maximum designed force onto the substrate 44 (slide). At the end of section 1, the substrate 44 is firmly held down and the cover member 48 is still in full contact with the slide. No separation yet between the substrate 44 and the cover member 48 at this stage. | This cam section is used in the sample processing assembly opening operation. The cam follower 94 moves from left to right. |
| 102 | In this section, the cam 83 continuously maintains the constant designed force during separation of the cover member 48 and the substrate 44. The cover member 48 starts separate from the substrate 44 shortly after it enters section 2. By the end of section 2, the cover member 48 is fully separated from the substrate 44. At this point, the substrate 44 is still held down rigidly by the substrate retaining arm 82 by the designed force. | This cam section is used in both sample processing assembly opening and closing operations. The cam follower 94 moves from left to right during opening operation and vice versa in closing operation. |
| 103 | In this section, the holding force of the substrate retaining arm 82 on the substrate 44 is reduced at a constant rate. By the end of section 3, the holding force is reduced to zero. At this point, the substrate retaining arm 82 only touches the substrate 44. | This cam section is used in both sample processing assembly opening and closing operations. The cam follower 94 moves from left to right during opening, and the holding force is reduced to zero. |
| | | While in closing operation, the cam 83 moves in the opposite direction and the holding force is increased from zero to maximum. |
| 104 | In this section, the substrate retaining arm 82 is pulled away from the substrate 44. At the end of section 4, the substrate retaining arm 82 reaches its maximum position and sits in the sample processing assembly lid 46. | This cam section is used in the sample processing assembly opening operation. The cam follower 94 moves from bottom to top. |
| 105 | In this section, the substrate retaining arm 82 sits in the sample processing assembly lid 46 securely when the sample processing assembly lid 46 is fully open during loading and unloading of the substrate 44 to/from the sample processing assembly 14. | The cam follower 94 is stationary in this section. The diameter of this arc matches the diameter of the cam follower 94. |
| 106 | In this section, the substrate retaining arm 82 starts moving away from the sample processing assembly lid. By the end of this section, the retaining arm 82 touches the substrate 44. | This cam section is used in the sample processing assembly closing operation. The cam follower 94 moves from top to bottom. |
| 107 | This section is not used to drive the cam follower 94 at any stage. | Not in use section |
| 108 | In this section, the holding force of the substrate retaining arm 82 is reduced from maximum to zero, then the substrate retaining arm 82 is pushed to the sample processing assembly lid 46 to ensure the substrate retaining arm 82 reaches the designed clearance with the slide to avoid the third sticking mode. | This cam section is used in the sample processing assembly closing operation. The cam follower 94 is moving from right to left. |

Accordingly, the active cam sequence during a sample processing assembly opening operation is cam sections 101 → 102 → 103 → 104 → 105, whilst the active cam sequence during a sample processing assembly closing operation is cam sections 105 → 106 → 103 → 102 → 108.

It will be appreciated that the above-described arrangement avoids the cover member sticking to the substate after incubation by applying an instantaneous force the beginning of the opening of the sample processing assembly to break the capillary seal of the reaction chamber with a slide.

Another advantage of the above-described arrangement is that when the sample processing assembly 14 is closed for incubation, the substrate retaining arm 82 is pushed to the lid by the cam groove 82. The arrangement also ensures that the substrate retaining arm 82 is clear from the substrate 44. This feature avoids the glue under the label to be squeezed out by substrate retaining arm 82 during incubation, thereby avoiding the above-mentioned third sticking mode.

To more fully explain this third sticking mode fully, glue is applied to the back of each label which makes the label stick to the substrate 44 (slide). The label is aimed to be applied to the top of the substrate 44 where a frosted area of the substrate 44 is located. This area is directly under the substrate retaining arm 82. Previous mechanisms generally press on the label. That pressing action squeezes the glue under the label out under high temperature during slide processing. That glue acts as a sticking agent; and sticks the substrate & label to the previous retaining mechanisms. Later on, when the substrate retaining mechanism moves away with the cover member of the sample processing assembly, it takes the substrate with it, which is still undesirable.

It is also desirable to have the substrate 44 stay in place after the cover member 46 is opened. An issue with existing mechanisms is that the substrate sticks to the cover member as described in the second sticking mode. Previous mechanisms can sometimes solve this issue but almost always create a new problem as described in the third sticking mode. The above-described arrangement addresses the first and second sticking modes without creating the third sticking mode.

Another advantage of the above-described arrangement is that as the slide processing assembly starts to open, the substrate retaining arm 82 moves down and presses on the substrate 44 before the cover member 48 is lifted away from the slide. This sequence ensures that the substrate 44 is firmly pushed against a flat and rigid heat spreader while the cover member 48 is still in contact with the substrate. This feature ensures that the substrate 44 is held throughout the opening process at the same location as when the cover member 48 is closed. This force is applied continuously and constantly with a controller force to the substrate 44 until the cover member 48 is fully separated from the substrate 44 to prevent any side-moves of the substrate 44 and from overloading the substrate 44.

This continuous force is not only to break the capillary seal of the reaction chamber with a substrate 44. But it can also hold the substrate rigidly enough to fully separate the substrate 44 from the cover member's seal reliably. In other words, this continuous force by the above-described arrangement prevents the first sticking mode and second slide sticking mode. Previous mechanisms fail to do this reliably.

Another advantage of the above-described arrangement is that after the cover member 48 is fully separated from the substrate 44, the substrate retaining arm 82 leaves the substrate 44 in a vertical motion to prevent any side moves of the substrate 44 when the substrate retaining arm 82 leaves the substrate 44. This feature ensures the substrate 44 remains in the same location after the substrate retaining arm 82 leaves the substrate 44. Previous retaining mechanisms fail to do this reliably.

Another advantage of the above-described arrangement is that the substrate retaining arm finishes its last motion in the closure body 46 to ensure the maximum clearance between the opened closure body 46 and mounting block 40 for the slide automation processing and slide handling. None of the previous retaining mechanisms can achieve this.

Where any or all of the terms "comprise", "comprises", "comprised" or "comprising" are used in this specification (including the claims) they are to be interpreted as specifying the presence of the stated features, integers, steps or components, but not precluding the presence of one or more other features, integers, steps or components.

## Claims

1. A substrate retaining mechanism (80) for use with a sample processing assembly (14) for treatment of a sample on a substrate, wherein the assembly includes: a mounting block (40) including a mounting surface (42) for the substrate (44) a closure body (46) configured to support a cover member (48), the closure body being rotatable about a first pivot axis (50) between an open position and a closed position, such that when the substrate is placed in the assembly and the closure body is in the closed position, the cover member engages the substrate to form a reaction chamber for processing the sample; and a closure body arm (70) rotatable about the second pivot axis (72) and engaging with the closure body so that rotation of the arm about the second pivot axis causes movement of the closure body between the open and closed positions, the substrate retaining mechanism (80) including:
a cam (83), and
a substrate retaining arm (82) rotatable about the first pivot axis, the substrate retaining arm including a cam follower (94) for sliding engagement with the cam,
wherein the substrate retaining mechanism is configured so that
when the closure body is closed and the cover member engages the substrate, the substrate retaining arm is clear of the substrate,
as the closure body arm commences rotation to enable the closure body to rotate towards the open position, but whilst the closure body remains in a closed position, the substrate retaining arm moves into engagement with the substrate, and
once the cover member is fully separated from substrate, the substrate retaining arm disengages with the substrate.

2. A substrate retaining mechanism according to claim 1, wherein the cam (83) is a grooved cam formed in a side wall of the closure body arm.

3. A substrate retaining mechanism according to either one of claims 1 or 2, wherein the cam follower (94) is a cam pin projecting laterally from the substrate retaining arm (82).

4. A substrate retaining mechanism according to claim 3, the sample processing assembly including a first pivot pin (86) to enable rotation of the cover body about the first pivot axis (50), wherein the substrate retaining arm (82) is attached to and rotatable about the first pivot pin.

5. A substrate retaining mechanism according to any one of claims 1 to 4, wherein the substrate retaining arm includes protrusions (100) for making contact with and applying a retaining force to the substrate.

6. A substrate retaining mechanism according to any one of claims 1 to 5, wherein the substrate retaining mechanism (80) is further configured so that the substrate retaining arm (82) disengages from the substrate perpendicular to the surface of the substrate.

7. A sample processing assembly (14) for treatment of a sample on a substrate (44), the assembly including:
a mounting block (40) including a mounting surface (42) for the substrate;
a closure body (46) configured to support a cover member (48), the closure body being rotatable about a first pivot axis (50) between an open position and a closed position, such that when the substrate is placed in the assembly and the closure body is in the closed position, the cover member engages the substrate to form a reaction chamber for processing the sample;
a closure body arm (70) rotatable about the second pivot axis (72) and engaging with the closure body so that rotation of the arm about the second pivot axis causes movement of the closure body between the open and closed positions; and
a substrate retaining mechanism (80) according to claim 1.

8. A sample processing assembly according to claim 7, wherein the cam (83) is a grooved cam formed in a side wall of the closure body arm (70).

9. A sample processing assembly according to either one of claims 7 or 8, wherein the cam follower (94) is a cam pin projecting laterally from the substrate retaining arm (82).

10. A sample processing assembly according to any one of claims 7 to 9, and further including a first pivot pin (86) to enable rotation of the cover body about the first pivot axis.

11. A sample processing assembly according to claim 10, wherein the substrate retaining arm (82) is attached to and rotatable about the first pivot pin (86).

12. A sample processing assembly according either one of claims 10 or 11, and further including a second pivot pin located through the mounting block (40) to enable rotation of the closure body arm (70) about the second pivot axis (72).

13. A sample processing assembly according to any one of claims 7 to 12, wherein the substrate retaining arm (82) includes protrusions (100) for making contact with and applying a retaining force to the substrate.

14. A sample processing assembly according to any one of claims 7 to 13, wherein the substrate retaining mechanism (80) is further configured so that the substrate retaining arm (82) disengages from the substrate perpendicular to the surface of the substrate.

15. A sample processing assembly according to any one of claims 7 to 14, wherein the closure body arm (70) includes a lateral projection (76) for engaging with the closure body.

## Patentansprüche

1. Substrathaltemechanismus (80) zur Verwendung mit einer Probenverarbeitungsanordnung (14) zur Behandlung einer Probe auf einem Substrat, wobei die Anordnung Folgendes einschließt: einen Montageblock (40), der eine Montagefläche (42) für das Substrat (44) einschließt; einen Verschlusskörper (46), der dazu ausgebildet ist, ein Abdeckelement (48) zu tragen, wobei der Verschlusskörper um eine erste Schwenkachse (50) zwischen einer offenen Stellung und einer geschlossenen Stellung drehbar ist, sodass, wenn das Substrat in der Anordnung platziert ist und sich der Verschlusskörper in der geschlossenen Stellung befindet, das Abdeckelement mit dem Substrat in Eingriff tritt, um eine Reaktionskammer zur Verarbeitung der Probe zu bilden; und einen Verschlusskörperarm (70), der um die zweite Schwenkachse (72) drehbar ist und mit dem Verschlusskörper in Eingriff steht, sodass eine Drehung des Arms um die zweite Schwenkachse eine Bewegung des Verschlusskörpers zwischen der offenen und der geschlossenen Stellung bewirkt, wobei der Substrathaltemechanismus (80) Folgendes einschließt:
eine Steuerkurve (83) und
einen Substrathaltearm (82), der um die erste Schwenkachse drehbar ist, wobei der Substrathaltearm einen Steuerkurvenfolger (94) für einen Gleiteingriff mit der Steuerkurve einschließt,
wobei der Substrathaltemechanismus derart ausgebildet ist, dass
wenn der Verschlusskörper geschlossen ist und das Abdeckelement mit dem Substrat in Eingriff steht, der Substrathaltearm von dem Substrat beabstandet ist,
wenn der Verschlusskörperarm eine Drehung beginnt, um dem Verschlusskörper eine Drehung in Richtung der offenen Stellung zu ermöglichen, jedoch während der Verschlusskörper in einer geschlossenen Stellung verbleibt, sich der Substrathaltearm in Eingriff mit dem Substrat bewegt, und
sobald das Abdeckelement vollständig von dem Substrat getrennt ist, der Substrathaltearm außer Eingriff mit dem Substrat gelangt.

2. Substrathaltemechanismus nach Anspruch 1, wobei die Steuerkurve (83) eine genutete Kurvenscheibe ist, die in einer Seitenwand des Verschlusskörperarms ausgebildet ist.

3. Substrathaltemechanismus nach einem der Ansprüche 1 oder 2, wobei der Steuerkurvenfolger (94) ein Steuerkurvenstift ist, der seitlich von dem Substrathaltearm (82) vorsteht.

4. Substrathaltemechanismus nach Anspruch 3, wobei die Probenverarbeitungsanordnung einen ersten Schwenkzapfen (86) einschließt, um eine Drehung des Abdeckkörpers um die erste Schwenkachse (50) zu ermöglichen,
wobei der Substrathaltearm (82) an dem ersten Schwenkzapfen angebracht und um diesen drehbar ist.

5. Substrathaltemechanismus nach einem der Ansprüche 1 bis 4, wobei der Substrathaltearm Vorsprünge (100) zum Herstellen eines Kontakts mit dem Substrat und zum Aufbringen einer Haltekraft auf das Substrat einschließt.

6. Substrathaltemechanismus nach einem der Ansprüche 1 bis 5, wobei der Substrathaltemechanismus (80) weiter derart ausgebildet ist, dass der Substrathaltearm (82) senkrecht zu der Oberfläche des Substrats außer Eingriff mit dem Substrat gelangt.

7. Probenverarbeitungsanordnung (14) zur Behandlung einer Probe auf einem Substrat (44), wobei die Anordnung Folgendes einschließt:
einen Montageblock (40), der eine Montagefläche (42) für das Substrat einschließt;
einen Verschlusskörper (46), der dazu ausgebildet ist, ein Abdeckelement (48) zu tragen, wobei der Verschlusskörper um eine erste Schwenkachse (50) zwischen einer offenen Stellung und einer geschlossenen Stellung drehbar ist, sodass, wenn das Substrat in der Anordnung platziert ist und sich der Verschlusskörper in der geschlossenen Stellung befindet, das Abdeckelement mit dem Substrat in Eingriff tritt, um eine Reaktionskammer zur Verarbeitung der Probe zu bilden;
einen Verschlusskörperarm (70), der um die zweite Schwenkachse (72) drehbar ist und mit dem Verschlusskörper in Eingriff steht, sodass eine Drehung des Arms um die zweite Schwenkachse eine Bewegung des Verschlusskörpers zwischen der offenen und der geschlossenen Stellung bewirkt; und
einen Substrathaltemechanismus (80) nach Anspruch 1.

8. Probenverarbeitungsanordnung nach Anspruch 7, wobei die Steuerkurve (83) eine genutete Kurvenscheibe ist, die in einer Seitenwand des Verschlusskörperarms (70) ausgebildet ist.

9. Probenverarbeitungsanordnung nach einem der Ansprüche 7 oder 8, wobei der Steuerkurvenfolger (94) ein Steuerkurvenstift ist, der seitlich von dem Substrathaltearm (82) vorsteht.

10. Probenverarbeitungsanordnung nach einem der Ansprüche 7 bis 9, die weiter einen ersten Schwenkzapfen (86) einschließt, um eine Drehung des Abdeckkörpers um die erste Schwenkachse zu ermöglichen.

11. Probenverarbeitungsanordnung nach Anspruch 10, wobei der Substrathaltearm (82) an dem ersten Schwenkzapfen (86) angebracht und um diesen drehbar ist.

12. Probenverarbeitungsanordnung nach einem der Ansprüche 10 oder 11, die weiter einen zweiten Schwenkzapfen einschließt, der durch den Montageblock (40) hindurch angeordnet ist, um eine Drehung des Verschlusskörperarms (70) um die zweite Schwenkachse (72) zu ermöglichen.

13. Probenverarbeitungsanordnung nach einem der Ansprüche 7 bis 12, wobei der Substrathaltearm (82) Vorsprünge (100) zum Herstellen eines Kontakts mit dem Substrat und zum Aufbringen einer Haltekraft auf das Substrat einschließt.

14. Probenverarbeitungsanordnung nach einem der Ansprüche 7 bis 13, wobei der Substrathaltemechanismus (80) weiter derart ausgebildet ist, dass der Substrathaltearm (82) senkrecht zu der Oberfläche des Substrats außer Eingriff mit dem Substrat gelangt.

15. Probenverarbeitungsanordnung nach einem der Ansprüche 7 bis 14, wobei der Verschlusskörperarm (70) einen seitlichen Fortsatz (76) zum Eingriff mit dem Verschlusskörper einschließt.

## Revendications

1. Mécanisme (80) de retenue de substrat destiné à être utilisé avec un ensemble (14) de traitement d'échantillon pour le traitement d'un échantillon sur un substrat, dans lequel l'ensemble inclut : un bloc de montage (40) incluant une surface de montage (42) pour le substrat (44) ; un corps de fermeture (46) configuré pour supporter un élément de couvercle (48), le corps de fermeture étant rotatif autour d'un premier axe de pivotement (50) entre une position ouverte et une position fermée, de telle sorte que lorsque le substrat est placé dans l'ensemble et que le corps de fermeture est en position fermée, l'élément de couvercle vient en prise avec le substrat pour former une chambre de réaction pour le traitement de l'échantillon ; et un bras (70) de corps de fermeture pivotant autour du deuxième axe de pivotement (72) et venant en prise avec le corps de fermeture de sorte que la rotation du bras autour du deuxième axe de pivotement provoque le déplacement du corps de fermeture entre les positions ouverte et fermée, le mécanisme (80) de retenue de substrat incluant :
une came (83), et
un bras (82) de retenue de substrat pivotant autour du premier axe de pivotement, le bras de retenue de substrat incluant un galet suiveur (94) pour une mise en prise par coulissement avec la came,
dans lequel le mécanisme de retenue de substrat est configuré de sorte que
lorsque le corps de fermeture est fermé et que l'élément de couvercle vient en prise avec le substrat, le bras de retenue de substrat est dégagé du substrat,
à mesure que le bras de corps de fermeture commence sa rotation pour permettre au corps de fermeture de pivoter vers la position d'ouverture, mais tandis que le corps de fermeture reste en position fermée, le bras de retenue de substrat se déplace pour entrer en contact avec le substrat, et
une fois que l'élément de couvercle est complètement séparé du substrat, le bras de retenue de substrat se désolidarise du substrat.

2. Mécanisme de retenue de substrat selon la revendication 1, dans lequel la came (83) est une came rainurée formée dans une paroi latérale du bras de corps de fermeture.

3. Mécanisme de retenue de substrat selon l'une quelconque des revendications 1 ou 2, dans lequel le galet suiveur (94) est une tige de came faisant saillie latéralement du bras (82) de retenue de substrat.

4. Mécanisme de retenue de substrat selon la revendication 3, l'ensemble de traitement d'échantillon incluant une première tige de pivotement (86) permettant la rotation du corps de couvercle autour du premier axe de pivotement (50),
dans lequel le bras (82) de retenue de substrat est fixé à et rotatif autour de la première tige de pivotement.

5. Mécanisme de retenue de substrat selon l'une quelconque des revendications 1 à 4, dans lequel le bras de retenue de substrat inclut des saillies (100) pour entrer en contact avec le substrat et appliquer une force de retenue sur le substrat.

6. Mécanisme de retenue de substrat selon l'une quelconque des revendications 1 à 5, dans lequel le mécanisme (80) de retenue de substrat est en outre configuré de sorte que le bras (82) de retenue de substrat se désolidarise du substrat perpendiculairement à la surface du substrat.

7. Ensemble (14) de traitement d'échantillon pour le traitement d'un échantillon sur un substrat (44), l'ensemble incluant :
un bloc de montage (40) incluant une surface de montage (42) pour le substrat ;
un corps de fermeture (46) configuré pour soutenir un élément de couvercle (48), le corps de fermeture étant rotatif autour d'un premier axe de pivotement (50) entre une position ouverte et une position fermée, de telle sorte que lorsque le substrat est placé dans l'ensemble et que le corps de fermeture est en position fermée, l'élément de couvercle vient en prise avec le substrat pour former une chambre de réaction pour le traitement de l'échantillon ;
un bras (70) de corps de fermeture rotatif autour du deuxième axe de pivotement (72) et venant en prise avec le corps de fermeture de sorte que la rotation du bras autour du deuxième axe de pivotement provoque le déplacement du corps de fermeture entre les positions ouverte et fermée ; et
un mécanisme (80) de retenue de substrat selon la revendication 1.

8. Ensemble de traitement d'échantillon selon la revendication 7, dans lequel la came (83) est une came rainurée formée dans une paroi latérale du bras (70) de corps de fermeture.

9. Ensemble de traitement d'échantillon selon l'une quelconque des revendications 7 ou 8, dans lequel le galet suiveur (94) est une tige de came faisant saillie latéralement du bras (82) de retenue de substrat.

10. Ensemble de traitement d'échantillon selon l'une quelconque des revendications 7 à 9, et en outre incluant un premier axe de pivotement (86) pour permettre la rotation du corps de couvercle autour du premier axe de pivotement.

11. Ensemble de traitement d'échantillon selon la revendication 10, dans lequel le bras (82) de retenue de substrat est fixé à et rotatif autour de la première tige de pivotement (86).

12. Ensemble de traitement d'échantillon selon l'une quelconque des revendications 10 ou 11, et en outre incluant une deuxième tige de pivotement située à travers le bloc de montage (40) pour permettre la rotation du bras (70) de corps de fermeture autour du deuxième axe de pivotement (72).

13. Ensemble de traitement d'échantillon selon l'une quelconque des revendications 7 à 12, dans lequel le bras (82) de retenue de substrat inclut des saillies (100) pour entrer en contact avec le substrat et appliquer une force de retenue sur le substrat.

14. Ensemble de traitement d'échantillon selon l'une quelconque des revendications 7 à 13, dans lequel le mécanisme (80) de retenue de substrat est en outre configuré de sorte que le bras (82) de retenue de substrat se désolidarise du substrat perpendiculairement à la surface du substrat.

15. Ensemble de traitement d'échantillon selon l'une quelconque des revendications 7 à 14, dans lequel le bras (70) de corps de fermeture inclut une saillie latérale (76) venant en prise avec le corps de fermeture.
